(19) Europäisches Patentamt
European Patent Office
Office européen des brevets

(11) **EP 2 613 432 B1**

(12) **FASCICULE DE BREVET EUROPEEN**

(45) Date de publication et mention
de la délivrance du brevet:
**30.03.2016 Bulletin 2016/13**

(51) Int Cl.:
**H02M 7/487** *(2007.01)*  **H02J 3/18** *(2006.01)*
**H02M 7/537** *(2006.01)*

(21) Numéro de dépôt: **13150565.3**

(22) Date de dépôt: **08.01.2013**

(54) **Compensateur d'énergie réactive et procédé d'équilibrage de tensions de demi-bus associé**

Reaktionsenergiekompensator und Verfahren zum Spannungsausgleich der damit verbundenen Bushälfte

Reactive power compensator and associated method for balancing half-bus voltages

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **09.01.2012 FR 1250196**

(43) Date de publication de la demande:
**10.07.2013 Bulletin 2013/28**

(73) Titulaire: **GE Energy Power Conversion Technology Ltd**
**Rugby**
**Warwickshire CV21 1BU (GB)**

(72) Inventeurs:
• **Morati, Mathieu**
  **90000 Belfort (FR)**
• **Urbain, Matthieu**
  **90000 BELFORT (FR)**
• **Girod, Daniel**
  **90300 CRAVANCHE (FR)**

(74) Mandataire: **Serjeants LLP**
**Dock**
**75 Exploration Drive**
**Leicester, LE4 5NU (GB)**

(56) Documents cités:
**WO-A1-02/080324    FR-A1- 2 947 971**

## Description

La présente invention concerne un compensateur d'énergie réactive propre à être relié électriquement à un réseau électrique alternatif comportant M phase(s) et présentant une fréquence de réseau, M étant supérieur ou égal à 1, le compensateur comprenant M phase(s) et comportant :

- au moins un bus de tension continue d'entrée propre à fournir de l'énergie réactive,
- au moins un onduleur de tension relié au bus de tension continue et propre à convertir un courant continu d'entrée en un courant alternatif de sortie, le ou chaque onduleur comprenant deux bornes d'entrée, M borne(s) de sortie et M branche(s) de commutation, chaque borne de sortie correspondant à une phase, chaque branche de commutation comportant des interrupteurs électroniques commandables, le ou chaque onduleur comprenant en outre un premier condensateur présentant une première tension à ses bornes et un deuxième condensateur présentant une deuxième tension à ses bornes, les deux condensateurs étant connectés en série entre les deux bornes d'entrée de l'onduleur, et
- des moyens de commande des interrupteurs électroniques du ou de chaque onduleur, comprenant des moyens de calcul propres à générer un courant cible de commande à partir d'un courant à compenser, des moyens de combinaison du courant cible de commande et du courant en sortie de l'onduleur pour fournir un courant différentiel, des moyens d'émission d'un signal de commande propre à piloter les interrupteurs à partir du courant différentiel pour la mise en forme du courant de sortie, et des moyens de correction, à partir des première et deuxième tensions, des signaux de commande des interrupteurs, les moyens de correction étant propres à réduire la différence entre la valeur de la première tension et celle de la deuxième tension.

L'invention concerne également un procédé d'équilibrage de tensions de demi-bus dans un tel compensateur.

On connaît du document « Modern active filters and traditional passive filters » de H. Akagi, publié en 2006 dans « Bulletin of the polish academy of sciences - Technical sciences - Vol. 4 - n°3 », un compensateur d'énergie réactive comportant six onduleurs. Les six onduleurs sont connectés en parallèle les uns des autres, et reliés d'un côté à un banc de condensateurs, et de l'autre côté à un réseau triphasé. Les six onduleurs sont connectés entre eux, du côté du réseau triphasé, par l'intermédiaire d'un transformateur comportant six secondaires. Les signaux de commande des interrupteurs électroniques de ces onduleurs sont des signaux à modulation de largeur d'impulsion.

Un tel compensateur d'énergie réactive placé dans un réseau électrique permet de compenser la circulation de puissance réactive d'une charge connectée sur le réseau électrique qui affecte la qualité de la puissance électrique délivrée sur le réseau.

Dans un tel réseau électrique, certaines perturbations, telles que des perturbations consécutives à la connexion d'un four à arc sur le réseau par exemple, peuvent toutefois entrainer un déséquilibre entre les valeurs des première et deuxième tensions du ou de chaque onduleur, ce déséquilibre pouvant être différent d'un onduleur à l'autre. L'existence d'un tel déséquilibre dégrade les performances du compensateur d'énergie réactive et peut conduire à la désactivation de ce dernier si la valeur du déséquilibre dépasse un certain seuil.

On connaît alors du document FR 2 947 971 ayant servi de base pour la forme en deux parties des revendications 1 et 8, un dispositif de conversion propre à être mis en oeuvre dans un système d'alimentation d'une machine électrique. Un tel dispositif de conversion comporte des moyens de correction des signaux de commande des interrupteurs du ou de chaque onduleur, les moyens étant propres à réduire, pour le ou chaque onduleur, la différence entre la valeur de la première tension et celle de la deuxième tension. Cette correction des signaux de commande est réalisée au moyen d'algorithmes particuliers de commande des interrupteurs.

Néanmoins, un tel dispositif de conversion ne peut être mis en oeuvre tel quel dans un compensateur d'énergie réactive du type précité pour résoudre le problème du rééquilibrage des valeurs des premières et deuxièmes tensions du ou de chaque onduleur. En effet, les régimes transitoires dus aux perturbations électriques sont plus soutenus dans un compensateur d'énergie réactive que dans un système d'alimentation, et cette solution n'est pas satisfaisante du point de vue notamment de la vitesse de correction mise en oeuvre.

Le but de l'invention est de proposer un compensateur d'énergie réactive permettant d'augmenter la vitesse d'équilibrage entre les valeurs des première et deuxième tensions du ou de chaque onduleur.

A cet effet, l'invention a pour objet un compensateur d'énergie réactive selon la revendication 1. Des modes particuliers de réalisation du compensateur d' énergie réactive sont définis dans les revendications dépendantes 2 à 7.

L'invention a également pour objet un procédé d'équilibrage de tensions de demi-bus dans un compensateur d'énergie réactive du type précité, selon la revendication 8. Des modes particulier de réalisation de cette méthode sont définis dans les revendications dépendantes 9 et 10.

Ces caractéristiques et avantages de l'invention apparaîtront à la lecture de la description qui va suivre, donnée uniquement à titre d'exemple, et faite en référence aux dessins annexés, sur lesquels :

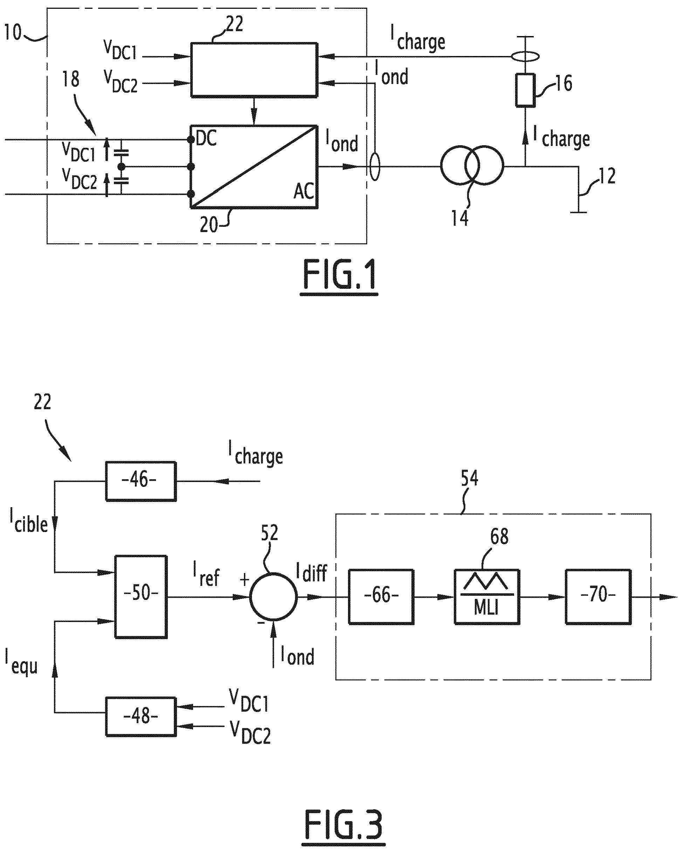

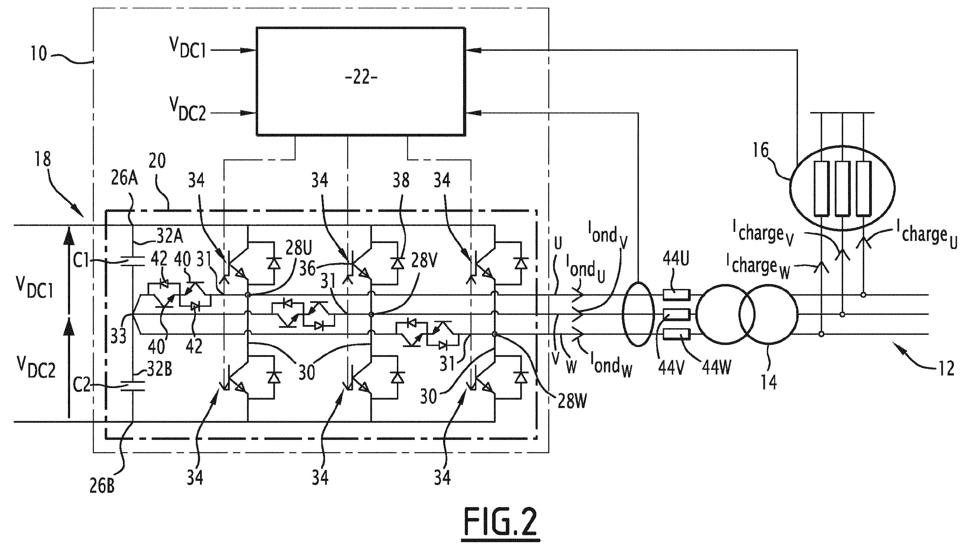

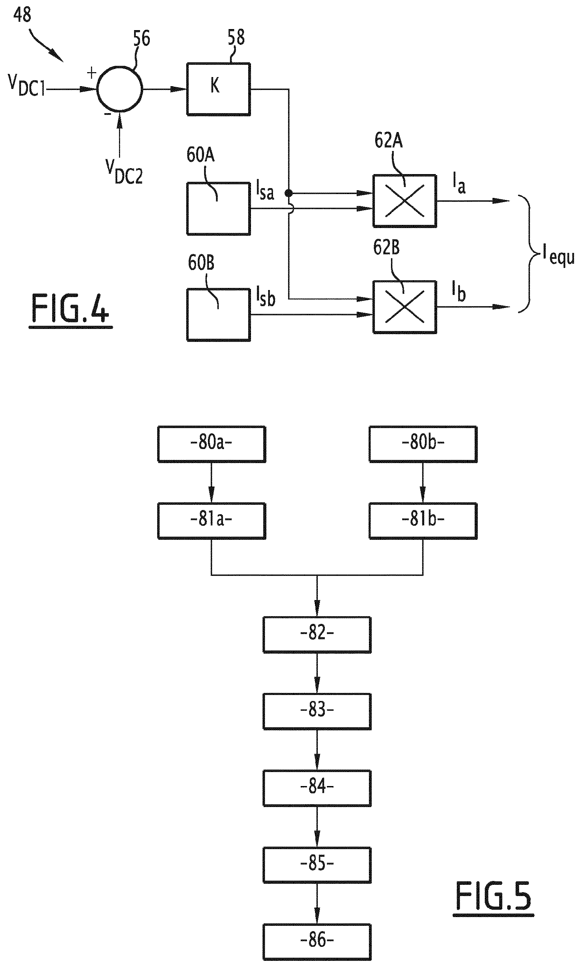

- la figure 1 est une vue schématique d'un compensateur d'énergie réactive selon l'invention, le compensateur étant relié via un transformateur de tension à un réseau alternatif, auquel est également connecté un four à arc ; - la figure 2 est un schéma électrique du compensateur d'énergie réactive de la figure 1 selon un exemple de réalisation, comportant un onduleur de tension triphasé et des moyens de commande des interrupteurs électroniques de l'onduleur, l'onduleur comportant deux condensateurs connectés en série ; - la figure 3 est un schéma fonctionnel des moyens de commande de la figure 2, comprenant un organe de correction des signaux de commande ; - la figure 4 est un schéma fonctionnel de l'organe de correction des signaux de commande de la figure 3 ; - la figure 5 est un organigramme représentant un procédé d'équilibrage de tensions de demi-bus dans un compensateur d'énergie réactive selon l'invention ;

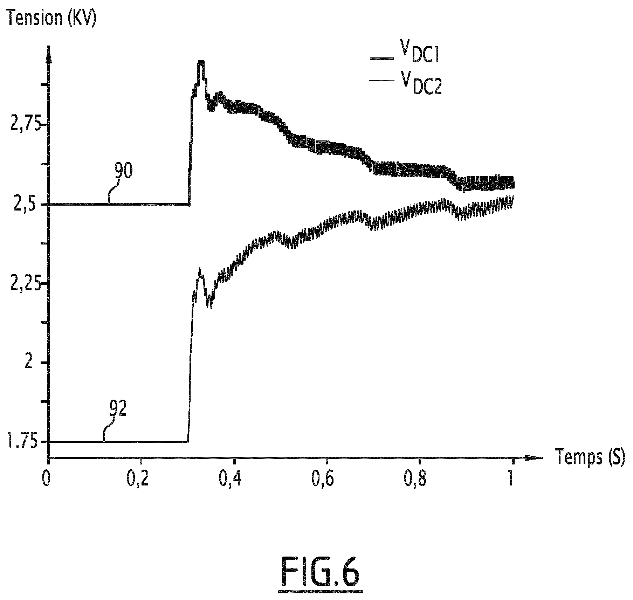

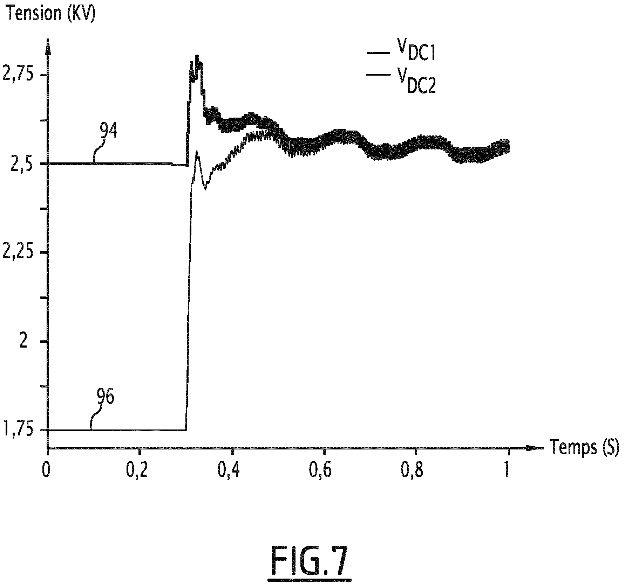

- la figure 6 est un ensemble de courbes représentant, en fonction du temps, les valeurs respectives des tensions aux bornes de chacun des condensateurs d'un compensateur d'énergie réactive de l'art antérieur ; et - la figure 7 est un ensemble de courbes représentant, en fonction du temps, les valeurs respectives des tensions aux bornes de chacun des condensateurs du compensateur d'énergie réactive de la figure 2.

La figure 1 représente un système de conversion 10 d'un courant continu d'entrée en un courant alternatif polyphasé de sortie. Le système de conversion 10 est relié d'une part à une source de courant continu ou redressé, non représentée, et d'autre part à un réseau électrique 12, via un transformateur de tension 14.

Le réseau électrique 12 est, par exemple, un réseau alternatif triphasé de tension élevée, typiquement de l'ordre de 33 kV entre phases et de fréquence f1 par exemple égale à 50 Hz. Un four à arc 16 est également relié au réseau électrique 12.

Le système de conversion 10 comporte un bus de tension continue 18 et un onduleur de tension 20, propre à convertir un courant continu d'entrée en un courant alternatif polyphasé de sortie. Cet onduleur est relié à la source de courant continu ou redressé via le bus 18 de tension continue.

Le courant $I_{ond}$ apparaissant sur la figure 1 identifie un courant alternatif fourni en sortie de l'onduleur 20 pour une phase quelconque.

Le système de conversion 10 comporte également des moyens 22 de commande de l'onduleur 20, adaptés pour commander l'onduleur de manière à piloter le courant de sortie délivré par l'onduleur 20 pour chaque phase.

Le bus 18 de tension continue fournit une tension de valeur par exemple égale à 5 kV.

Dans le mode de réalisation considéré, le système de conversion 10 est un compensateur d'énergie réactive propre à compenser les variations d'énergie réactive sur le réseau alternatif 12, via la source de courant continu et le bus 18 de tension continue, propres à fournir de l'énergie réactive, en ajustant les phases du courant électrique par rapport à celles de la tension électrique, délivrées sur le réseau.

L'onduleur de tension 20 comporte une borne positive d'entrée, une borne négative d'entrée, et M bornes de sortie. Chaque borne de sortie correspond à une phase respective du courant alternatif polyphasé de sortie propre à être délivré par l'onduleur. Le courant de sortie comporte une pluralité M de phases, M étant un nombre entier supérieur ou égal à un. Dans l'exemple de réalisation de la figure 2, le nombre M de phases est égal à trois et l'onduleur de tension 20 est un onduleur triphasé trois niveaux clampé par le neutre. L'onduleur triphasé 20 comprend une borne positive d'entrée 26A, une borne négative d'entrée 26B et trois bornes de sortie 28U, 28V, 28W. L'onduleur 20 comprend en outre, pour chaque borne de sortie 28U, 28V, 28W correspondant à une phase respective U, V, W, une branche de commutation 30 reliée entre les deux bornes d'entrée 26A, 26B et une branche de clampage 31 reliant le neutre à un point milieu de la branche de commutation associée. L'onduleur triphasé 20 comprend également une première branche 32A et une deuxième branche 32B. Les deux branches 32A, 32B sont connectées en série entre les deux bornes d'entrée 26A, 26B, et sont reliées entre elles en un point milieu 33 formant le neutre.

La branche 32A, respectivement 32B, comporte un premier condensateur C1, respectivement un deuxième condensateur C2, et forme un demi-bus de tension continue.

Le premier condensateur C1 présente à ses bornes une première tension continue $V_{DC1}$ et le deuxième condensateur C2 présente à ses bornes une deuxième tension continue $V_{DC2}$. La première tension continue $V_{DC1}$ et la deuxième tension continue $V_{DC2}$ sont orientées dans le même sens. Les valeurs des capacités des deux condensateurs C1, C2 sont, par exemple, identiques.

En variante, chaque condensateur C1, C2 est remplacé par une source de tension continue.

Chaque branche de commutation 30 comprend deux interrupteurs électriques commandables 34 connectés en série et dans le même sens, et reliés entre eux par un point milieu, chaque point milieu formant une borne de sortie 28U, 28V, 28W.

Comme connu en soi, chaque interrupteur électrique 34 est un interrupteur bidirectionnel en courant et unidirectionnel en tension. Chaque interrupteur électrique 34 comprend un transistor 36 et une diode 38 connectée en antiparallèle assurant ainsi des trajets de circulation bidirectionnelle de courant lorsque le transistor 36 est passant.

Tous les interrupteurs électriques 34 sont, par exemple, identiques. Le transistor 36 est, par exemple, un transistor bipolaire à grille isolée, également appelé transistor IGBT (de l'anglais Insulated Gate Bipolar Transistor). La grille de chaque transistor 36 est reliée aux moyens de commande 22 pour recevoir un signal de commande correspondant.

Chaque branche de clampage 31 est connectée entre le point milieu 33 et une borne de sortie 28U, 28V, 28W. Chaque branche de clampage 31 comporte deux transistors 40 connectés tête-bêche et en série. Elle comporte également deux diodes 42, chacune étant connectée en antiparallèle d'un transistor 40 respectif, assurant ainsi des trajets de circulation bidirectionnelle de courant lorsque le transistor 40 correspondant est passant.

Les transistors 40 sont, par exemple, des transistors IGBT.

Entre le compensateur d'énergie réactive 10 et le transformateur 14, une inductance de phase $44_U$, $44_V$, respectivement $44_W$, est disposée sur la phase U, V, respectivement W.

Le four à arc 16 consomme un courant $I_{charge\,U}$, $I_{charge\,V}$, respectivement $I_{charge\,W}$ sur la phase U, V, respectivement W.

L'onduleur 20 fournit un courant $I_{ond\,U}$, $I_{ond\,V}$, respectivement $I_{ond\,W}$ sur la phase U, V, respectivement W.

Dans le mode de réalisation considéré, les moyens de commande 22 sont adaptés pour piloter et commander la compensation de la circulation de puissance réactive sur le réseau 12 et ainsi augmenter le facteur de puissance du réseau.

Les moyens de commande 22 sont reliés à chacun des interrupteurs électriques 34, comme indiqué précédemment, et sont propres à envoyer des signaux de commande auxdits interrupteurs 34. Les moyens de commande 22 sont en outre reliés à des dispositifs de mesure des courants $I_{charge\,U}$, $I_{charge\,V}$, $I_{charge\,W}$, $I_{ond\,U}$, $I_{ond\,V}$, $I_{ond\,W}$, et à des dispositifs de mesure des tensions $V_{DC1}$ et $V_{DC2}$, ces dispositifs n'étant pas représentés sur les figures.

On nomme par la suite $I_{charge}$ le vecteur courant à trois dimensions représentant le courant dans la charge 16. $I_{charge}$ comporte trois composantes de courant mesuré, chaque composante correspondant à une phase U, V, W.

Le dispositif de mesure des courants $I_{ond\,U}$, $I_{ond\,V}$, $I_{ond\,W}$ comporte un module de conversion de ces courants triphasés en un vecteur courant $I_{ond}$ à deux dimensions, représentatif de ces courants dans un système diphasé.

Comme illustré sur la figure 3, les moyens de commande 22 comprennent un organe 46 de calcul d'un courant de commande et un organe 48 de correction d'un courant de commande. Les moyens de commande 22 comprennent en outre un sommateur 50, un soustracteur 52 et des moyens 54 d'émission d'un signal de commande.

Dans l'exemple de réalisation, l'organe de calcul 46 est un bloc de compensation de puissance réactive.

Le bloc de compensation de puissance réactive 46 est connecté au sommateur 50. Il reçoit en entrée les composantes mesurées du vecteur courant $I_{charge}$ consommé par le four à arc 16 et est adapté pour mettre en oeuvre un algorithme connu en soi de détermination d'une valeur cible d'un vecteur courant $I_{cible}$ en sortie de l'onduleur 20. Le bloc 46 comporte un module de conversion d'un vecteur courant à trois dimensions en un vecteur courant à deux dimensions, un tel module étant connu en soi. Le vecteur courant $I_{cible}$, défini dans un système diphasé, comporte deux composantes de courant cible, et permet de compenser la puissance réactive du four à arc 16.

Le bloc de compensation de puissance réactive 46 est ainsi propre à calculer et à fournir en entrée du sommateur 50 le vecteur courant cible de commande $I_{cible}$.

L'organe de correction 48 est connecté au sommateur 50. Il reçoit en entrée les valeurs courantes des tensions $V_{DC1}$ et $V_{DC2}$ et est adapté pour mettre en oeuvre un algorithme de détermination d'une valeur d'un vecteur courant d'équilibrage $I_{equ}$. Le vecteur courant d'équilibrage $I_{equ}$, défini dans un système diphasé, permet de corriger le vecteur courant $I_{cible}$ afin de réduire la différence entre la valeur courante de la première tension $V_{DC1}$ et la valeur courante de la deuxième tension $V_{DC2}$. Le vecteur courant d'équilibrage $I_{equ}$ comporte une première composante de courant d'équilibrage Ia et une deuxième composante de courant d'équilibrage Ib.

Comme illustré sur la figure 4, l'organe de correction 48 comporte un soustracteur 56, un amplificateur 58 connecté en sortie du soustracteur 56, une première source de courant alternatif 60A et une deuxième source de courant alternatif 60B. L'organe de correction 48 comporte en outre un premier multiplieur 62A et un deuxième multiplieur 62B.

Le soustracteur 56 reçoit sur son entrée non inverseuse la valeur courante de la tension $V_{DC1}$ et sur son entrée inverseuse la valeur courante de la tension $V_{DC2}$.

La sortie de l'amplificateur 58 est connectée à une entrée de chaque multiplieur 62A, 62B. L'amplificateur 58 est propre à multiplier le signal d'entrée par un gain K, K étant un nombre réel.

La source de courant alternatif 60A, respectivement 60B est connectée à une entrée du multiplieur 62A, respectivement 62B.

La source de courant alternatif 60A fournit en entrée du premier multiplieur 62A un courant sinusoïdal Isa. Le courant Isa(t) peut être exprimé ainsi : $Isa(t) = \sin(2\pi.2f1.t)$.

Dans l'exemple de réalisation, f1 = 50 Hz et $Isa(t) = \sin(200\pi.t)$.

La source de courant alternatif 60B fournit en entrée du deuxième multiplieur 62B un courant sinusoïdal Isb. Le courant Isb(t) peut être exprimé ainsi : $Isb(t) = \cos(2\pi.2f1.t)$. Dans l'exemple de réalisation, f1 = 50 Hz et $Isb(t) = \cos(200\pi.t)$.

La source de courant alternatif 60A, respectivement 60B génère ainsi un courant sinusoïdal Isa(t), respectivement Isb(t), de fréquence égale au double de la fréquence de réseau.

Le premier multiplieur 62A fournit sur sa sortie la composante de courant d'équilibrage la. La composante de courant d'équilibrage Ia(t) peut être exprimée ainsi :

$$Ia(t) = K.[\,Vdc1(t) - Vdc2(t)\,] * \sin(2\pi.2f1.t) \qquad (1)$$

Le deuxième multiplieur 62B fournit sur sa sortie la composante de courant d'équilibrage Ib. La composante de courant d'équilibrage Ib(t) peut être exprimée ainsi :

$$Ib(t) = K.[\,Vdc1(t) - Vdc2(t)\,] * \cos(2\pi.2f1.t) \qquad (2)$$

Dans l'exemple de réalisation, f1 = 50 Hz. On a donc: Ia(t) = K.[ Vdc1(t) - Vdc2(t) ]*sin $(200\pi.t)$ et Ib(t) = K. [ Vdc1(t) - Vdc2(t) ]*cos $(200\pi.t)$ .

L'organe de correction 48 est ainsi propre à calculer et à fournir en entrée du sommateur 50 le vecteur courant d'équilibrage $I_{equ}$. Chaque composante Ia, Ib du vecteur courant d'équilibrage $I_{equ}$ est un courant sinusoïdal de fréquence égale au double de la fréquence de réseau, et d'amplitude proportionnelle à la différence entre la valeur courante de la première tension $V_{DC1}$ et la valeur courante de la deuxième tension $V_{DC2}$.

En variante, la source de courant alternatif 60A, respectivement 60B génère un courant sinusoïdal Isa(t), respectivement Isb(t), de fréquence égale à N fois la fréquence de réseau f1, N étant un entier pair non nul. L'organe de correction 48 est alors propre à calculer et à fournir en entrée du sommateur 50 le vecteur courant d'équilibrage $I_{equ}$, chaque composante Ia, Ib du vecteur courant d'équilibrage $I_{equ}$ étant un courant sinusoïdal de fréquence égale à N fois la fréquence de réseau. Selon cette variante de réalisation, les composantes Ia(t) et Ib(t) peuvent être exprimées ainsi :

$$Ia(t) = K.[Vdc1(t) - Vdc2(t)] * \sin(2\pi.N.f1.t)$$

$$Ib(t) = K.[Vdc1(t) - Vdc2(t)] * \cos(2\pi.N.f1.t)$$

En variante, la source de courant alternatif 60A, respectivement 60B génère un courant périodique, de fréquence égale à N fois la fréquence de réseau f1, N étant un entier pair non nul. L'organe de correction 48 est alors propre à calculer et à fournir en entrée du sommateur 50 le courant d'équilibrage $I_{equ}$, chaque composante Ia, Ib du vecteur courant d'équilibrage $I_{equ}$ étant un courant périodique de fréquence égale à N fois la fréquence de réseau.

La sortie du sommateur 50 est connectée à une entrée du soustracteur 52. Le sommateur 50 reçoit sur une entrée le vecteur courant cible de commande $I_{cible}$ et sur son autre entrée le vecteur courant d'équilibrage $I_{equ}$. Il fournit sur sa sortie un vecteur courant cible de référence $I_{ref}$.

Ce vecteur courant $I_{ref}$ est le vecteur courant cible à fournir par l'onduleur 20, permettant la compensation de la charge réactive d'une part et la réduction de la différence entre les valeurs courantes des tensions $V_{DC1}$ et $V_{DC2}$ d'autre part.

La sortie du soustracteur 52 est connectée à l'entrée des moyens 54 d'émission d'un signal de commande. Le soustracteur 52 reçoit sur son entrée non inverseuse le vecteur courant cible de référence $I_{ref}$ et sur son entrée inverseuse le vecteur courant $I_{ond}$. Il fournit sur sa sortie un vecteur courant différentiel $I_{diff}$. Le vecteur courant $I_{diff}$ est défini dans un système diphasé.

Comme illustré sur la figure 3 et comme connu en soi, les moyens 54 d'émission d'un signal de commande comportent un régulateur de courant 66, un modulateur 68 connecté en sortie du régulateur 66, et un module de commande 70 connecté en sortie du modulateur 68.

Le régulateur 66 reçoit en entrée le vecteur courant différentiel $I_{diff}$ et est propre à calculer, en fonction du vecteur courant $I_{diff}$, des signaux de tension modulante pour chaque phase U, V, W. Le régulateur 66 comporte un module de conversion d'un vecteur courant à deux dimensions en un vecteur tension à trois dimensions, un tel module étant connu en soi.

Dans l'exemple de réalisation, le régulateur 66 est de type PI (Proportionnel Intégral), ce type de régulateur étant classiquement utilisé dans la régulation des systèmes bouclés.

En variante, le régulateur 66 est de type RST.

Les signaux de tension modulante sont fournis en entrée du modulateur 68 adapté pour procéder à une modulation par largeur d'impulsion avec entrelacement des impulsions et déphasage correspondant. Le modulateur 68 est par exemple adapté pour comparer une tension modulante reçue en entrée à un signal triangulaire, comme connu en soi.

Les résultats de cette comparaison sont fournis en entrée du module de commande 70. Le module de commande 70 est propre à déterminer en fonction desdits résultats des signaux de commande destinés aux interrupteurs 34, et à appliquer ces signaux de commande aux interrupteurs 34.

En variante, le compensateur d'énergie réactive 10 comporte une pluralité P d'onduleurs 20, P étant un entier supérieur ou égal à deux. Chaque onduleur 20 délivre un courant alternatif polyphasé et est connecté par ses M bornes de sortie 28 au transformateur de tension 14. Les moyens de commande 22 de chaque onduleur comportent un organe de correction 48 propre à ajouter un vecteur courant d'équilibrage $I_{equ}$ au vecteur courant cible de commande $I_{cible}$. Le compensateur d'énergie réactive 10 comporte donc P organes de correction.

Sur la figure 5 sont représentées les étapes d'un procédé dans un mode de réalisation de l'invention, mis en oeuvre par le compensateur d'énergie réactive 10.

Le procédé comporte une étape initiale 80a, dans laquelle les courants $I_{charge\,U}$, $I_{charge\,V}$, $I_{charge\,W}$ circulant dans le four à arc 16 sont mesurés.

Lors d'une étape 81 a suivante, le bloc de compensation de puissance réactive 46 détermine un vecteur courant cible de commande $I_{cible}$ à fournir par l'onduleur 20, en fonction des courants $I_{charge\,U}$, $I_{charge\,V}$, $I_{charge\,W}$ mesurés.

En parallèle des étapes 80a, 81 a, lors d'une étape 80b, les valeurs courantes des tensions $V_{DC1}$ et $V_{DC2}$ sont mesurées. Au cours de cette même étape 80b les courants $I_{ond\,U}$, $I_{ond\,V}$, $I_{ond\,W}$ circulant en sortie de l'onduleur 20 sont mesurés, et le vecteur courant $I_{ond}$ est construit.

En parallèle des étapes 80a, 81 a, lors d'une étape 81 b suivant l'étape 80b, l'organe de correction 48 détermine le vecteur courant d'équilibrage $I_{equ}$, comportant les composantes de courant d'équilibrage la et Ib. L'expression de la composante de courant la est donnée par la formule 1 détaillée précédemment, l'expression de la composante de courant Ib étant donnée par la formule 2.

Lors d'une étape 82 suivante, le sommateur 50 somme le vecteur courant cible $I_{cible}$ et le vecteur courant d'équilibrage $I_{equ}$, le résultat de cette somme déterminant le vecteur courant cible $I_{réf}$.

Lors d'une étape 83 suivante, le soustracteur 52 soustrait les composantes du vecteur courant $I_{ond}$ aux composantes du vecteur courant cible $I_{réf}$, le résultat de cette soustraction déterminant le vecteur courant différentiel $I_{diff}$.

Lors d'une étape 84 suivante, le régulateur 66 détermine des signaux de tension modulante pour chaque phase U, V, W, en fonction du vecteur courant différentiel $I_{diff}$, comme décrit précédemment.

Lors d'une étape 85 suivante, le modulateur 68 effectue une modulation par largeur d'impulsion avec entrelacement des impulsions et déphasage correspondant, en fonction des signaux de tension modulante. Le modulateur 68 compare par exemple une tension modulante reçue en entrée à un signal triangulaire, comme connu en soi.

Lors d'une étape 86 suivante, le module de commande 70 détermine, en fonction des signaux de modulation, des signaux de commande destinés aux interrupteurs 34. Le module de commande 70 applique ces signaux de commande aux interrupteurs 34.

Sur la figure 6, les courbes 90, 92 représentent respectivement l'évolution des tensions $V_{DC1}$, $V_{DC2}$, pour un compensateur d'énergie réactive de l'art antérieur, analogue au compensateur 10 selon l'invention mais ne comportant pas d'organe 48 propre à fournir un courant d'équilibrage $I_{equ}$. Ce compensateur d'énergie réactive comporte toutefois deux résistances d'équilibrage, chaque résistance étant connectée en parallèle d'un condensateur C1, C2 et ayant une valeur de 10 kΩ. Ces deux résistances sont propres à réduire la différence entre la valeur de la première tension $V_{DC1}$ et celle de la deuxième tension $V_{DC2}$.

A l'instant de temps 0 s, une perturbation consécutive à la connexion d'un four à arc sur le réseau apparaît. Les tensions $V_{DC1}$, $V_{DC2}$ sont alors déséquilibrées : la première tension $V_{DC1}$ vaut 2,5 kV tandis que la deuxième tension $V_{DC2}$ vaut 1,75 kV. A l'instant de temps 0,3 s les moyens de commande de l'onduleur commandent la commutation des interrupteurs électroniques. Du fait de la présence des deux résistances d'équilibrages, les valeurs des tensions $V_{DC1}$, $V_{DC2}$ convergent l'une vers l'autre, pour se rejoindre sensiblement à l'instant de temps 1 s.

Sur la figure 7, les courbes 94, 96 représentent respectivement l'évolution des tensions $V_{DC1}$, $V_{DC2}$, pour le compensateur d'énergie réactive 10. Plus précisément, les courbes 94, 96 représentent l'évolution des tensions $V_{DC1}$, $V_{DC2}$, lors des étapes 80a à 86 précédemment décrites.

De manière analogue à la figure 6, une perturbation apparaît à l'instant de temps 0 s, et les tensions $V_{DC1}$, $V_{DC2}$ sont déséquilibrées entre les instants de temps 0 s et 0,3 s. Entre ces deux instants de temps, la première tension $V_{DC1}$ vaut 2,5 kV et la deuxième tension $V_{DC2}$ vaut 1,75 kV. A l'instant de temps 0,3 s, correspondant au début de l'étape 86, les moyens de commande 22 commandent la commutation des interrupteurs 34. Les valeurs des tensions $V_{DC1}$, $V_{DC2}$ convergent l'une vers l'autre, et viennent se confondre à l'instant de temps 0,6 s.

On conçoit ainsi que le compensateur d'énergie réactive selon l'invention permet d'augmenter la vitesse d'équilibrage entre les valeurs des premières et deuxième tensions du ou de chaque onduleur.

Dans l'exemple de réalisation présenté, le courant cible de commande est augmenté d'un courant d'équilibrage pour une harmonique de rang deux. Ce choix de conception permet avantageusement que le procédé d'équilibrage ne soit pas limité par la fréquence d'échantillonnage des moyens de commande.

**Revendications**

1. Compensateur d'énergie réactive (10) propre à être relié électriquement à un réseau électrique alternatif (12) comprenant M phase(s) et présentant une fréquence de réseau, M étant supérieur ou égal à 1, le compensateur (10) comprenant M phase(s) et comportant :

   - au moins un bus (18) de tension continue d'entrée propre à fournir de l'énergie réactive,
   - au moins un onduleur de tension (20) relié au bus de tension continue (18) et propre à convertir un courant continu d'entrée en un courant alternatif de sortie, le ou chaque onduleur (20) comprenant deux bornes d'entrée (26A, 26B), M borne(s) de sortie (28U, 28V, 28W) et M branche(s) de commutation (30), chaque borne de sortie (28U, 28V, 28W) correspondant à une phase, chaque branche de commutation (30) comportant des interrupteurs électroniques commandables (34), le ou chaque onduleur (20) comprenant en outre un premier condensateur (C1) présentant une première tension ($V_{DC1}$) à ses bornes et un deuxième condensateur (C2) présentant une deuxième tension ($V_{DC2}$) à ses bornes, les deux condensateurs (C1, C2) étant connectés en série entre les deux bornes d'entrée (26A, 26B) de l'onduleur,
   - des moyens (22) de commande des interrupteurs électroniques (34) du ou de chaque onduleur (20), comprenant des moyens de calcul (46) propres à générer un courant cible de commande ($I_{cible}$) à partir d'un courant à compenser (Iharge), des moyens (52) de combinaison du courant cible de commande ($I_{cible}$) et du courant ($I_{ond}$) en sortie de l'onduleur (20) pour fournir un courant différentiel ($I_{diff}$), des moyens (54) d'émission d'un signal de commande propre à piloter les interrupteurs (34) à partir du courant différentiel ($I_{diff}$) pour la mise en forme du courant de sortie ($I_{ond}$), et des moyens (48, 50) de correction, à partir des première ($V_{DC1}$) et deuxième ($V_{DC2}$) tensions, des signaux de commande des interrupteurs (34), les moyens (48, 50) de correction étant propres à réduire la différence entre la valeur de la première tension et celle de la deuxième tension,

   **caractérisé en ce que** les moyens (48, 50) de correction sont propres à ajouter un courant d'équilibrage ($I_{equ}$) au courant cible de commande ($I_{cible}$), le courant d'équilibrage ($I_{equ}$) étant propre à corriger le courant cible de commande ($I_{cible}$) afin de réduire la différence entre les valeurs des première ($V_{DC1}$) et deuxième ($V_{DC2}$) tensions, le courant cible de commande ($I_{cible}$) étant augmenté à l'aide dudit courant d'équilibrage pour une harmonique paire de la fréquence réseau.

2. Compensateur d'énergie réactive (10) selon la revendication 1, **caractérisé en ce que** les moyens (48) de correction sont propres à déterminer une valeur du courant d'équilibrage ($I_{equ}$), le courant d'équilibrage $I_{equ}$) étant un signal périodique de fréquence égale à un multiple pair non nul de la fréquence de réseau.

3. Compensateur d'énergie réactive (10) selon la revendication 2, **caractérisé en ce que** le courant d'équilibrage ($I_{equ}$) est un signal sinusoïdal de fréquence égale à un multiple pair non nul de la fréquence de réseau.

4. Compensateur d'énergie réactive (10) selon la revendication 2 ou 3, **caractérisé en ce que** l'amplitude du courant d'équilibrage ($I_{equ}$) est proportionnelle à la différence entre la valeur courante de la première tension ($V_{DC1}$) et la valeur courante de la deuxième tension ($V_{DC2}$).

5. Compensateur d'énergie réactive (10) selon l'une quelconque des revendications précédentes, **caractérisé en ce que** chaque interrupteur électronique (34) est bidirectionnel, et comprend un transistor (36) et une diode (38) connectée en anti-parallèle.

6. Compensateur d'énergie réactive (10) selon la revendication 5, **caractérisé en ce que** le transistor (36) est un transistor bipolaire à grille isolée.

7. Compensateur d'énergie réactive (10) selon l'une quelconque des revendications précédentes, **caractérisé en ce que** le courant d'équilibrage ($I_{equ}$) est un signal périodique de fréquence égale au double de la fréquence de réseau.

8. Procédé d'équilibrage de tensions de demi-bus dans un compensateur d'énergie réactive (10) selon l'une quelconque des revendications précédentes, comportant les étapes suivantes :

   - calcul (81 a) de signaux de commande des interrupteurs électroniques (34) du ou de chaque onduleur (20) du compensateur d'énergie réactive (10),
   - correction des signaux de commande, afin de réduire la différence entre la valeur de la première tension ($V_{DC1}$) et celle de la deuxième tension ($V_{DC2}$),

- application (86) des signaux de commande modifiés auxdits interrupteurs électroniques,

le procédé étant **caractérisé en ce que** :

- l'étape de correction des signaux de commande comprend une étape (82) d'ajout, par les moyens de correction (50) du compensateur (10), d'un courant d'équilibrage au courant cible de commande, le courant d'équilibrage étant propre à corriger le courant cible de commande à l'aide dudit courant d'équilibrage,

afin de réduire la différence entre les valeurs des première ($V_{DC1}$) et deuxième ($V_{DC2}$) tensions, le courant cible de commande étant augmenté pour une harmonique paire de la fréquence réseau.

9. Procédé selon la revendication 8, **caractérisé en ce que** l'étape de correction des signaux de commande comprend une étape préalable (81 b) de détermination, par les moyens de correction (48) du compensateur (10), d'une valeur du courant d'équilibrage, le courant d'équilibrage étant un signal périodique de fréquence égale à un multiple pair non nul de la fréquence de réseau.

10. Procédé selon la revendication 9, **caractérisé en ce que** lors de l'étape (81 b) de détermination d'une valeur du courant d'équilibrage, l'amplitude du courant d'équilibrage est prise comme étant proportionnelle à la différence entre la valeur courante de la première tension ($V_{DC1}$) et la valeur courante de la deuxième tension ($V_{DC2}$).

## Patentansprüche

1. Blindleistungskompensator (10), der dazu eingerichtet ist, elektrisch mit einem elektrischen Wechselstromnetz (12) verbunden zu werden, das M Phase(n) aufweist und eine Netzfrequenz bereitstellt, wobei M größer oder gleich 1 ist, wobei der Kompensator (10) M Phase(n) aufweist und umfasst:

- zumindest ein Eingangsgleichspannungsbus (18), der dazu eingerichtet ist, eine Blindleistung bereitzustellen,
- mindestens einen Spannungswechselrichter (20), der mit dem Gleichspannungsbus (18) verbunden ist und dazu eingerichtet ist, einen Eingangsgleichstrom in einen Ausgangswechselstrom umzuwandeln, wobei der oder jeder Wechselrichter (20) zwei Eingangsanschlüsse (26A, 26B), M Ausgangsanschluss/Ausgangsanschlüsse (28U, 28V, 28W) und M Kommutierungszweig(e) (30) aufweist, wobei jeder Ausgangsanschluss (28U, 28V, 28W) einer Phase entspricht, wobei jeder Kommutierungszweig (30) ansteuerbare elektronische Unterbrecher (34) aufweist, wobei der oder jeder Wechselrichter (20) außerdem einen ersten Kondensator (C1), der eine erste Spannung ($V_{DC1}$) an seinen Anschlüssen bereitstellt und einen zweiten Kondensator (C2), der eine zweite Spannung ($V_{DC2}$) an seinen Anschlüssen bereitstellt, aufweist, wobei die beiden Kondensatoren (C1, C2) in Reihe zwischen den beiden Eingangsanschlüssen (26A, 26B) des Wechselrichters geschaltet sind,
- Ansteuermittel (22) der elektronischen Unterbrecher (34) des oder jedes Wechselrichters (20), aufweisend Rechenmittel (46), die dazu eingerichtet sind, einen Steuerzielstrom ($I_{cible}$) aus einem Kompensationsstrom ($I_{charge}$) zu erzeugen, Kombinationsmittel (52) des Steuerzielstroms ($I_{cible}$) und des Ausgangsstroms ($I_{ond}$) des Wechselrichters (20), um einen Differenzstrom ($I_{diff}$) bereitzustellen, Steuersignalabgabemittel (54), die dazu eingerichtet sind, die Unterbrecher (34) abhängig von dem Differenzstrom ($I_{diff}$) anzusteuern, um den Ausgangsstrom ($I_{ond}$) zu bilden, und Korrekturmittel (48, 50), wobei die Korrekturmittel (48, 50) dazu eingerichtet sind, die Differenz zwischen dem Wert der ersten Spannung und dem der zweiten Spannung abhängig von der ersten ($V_{DC1}$) und der zweiten ($V_{DC2}$) Spannung und Steuersignalen für die Unterbrecher (34) zu reduzieren,

dadurch gekennzeichnet, dass die Korrekturmittel (48, 50) dazu eingerichtet sind, einen Ausgleichsstrom ($I_{equ}$) zu dem Steuerzielstrom ($I_{cible}$) hinzuzufügen, wobei der Ausgleichsstrom ($I_{equ}$) dazu eingerichtet ist, den Steuerzielstrom ($I_{cible}$) zu korrigieren, um die Differenz zwischen den Werten der ersten ($V_{DC1}$) und der zweiten ($V_{DC2}$) Spannung zu reduzieren, wobei der Steuerzielstrom ($I_{cible}$) mit Hilfe dieses Ausgleichsstroms um eine geradzahlige Oberwelle der Netzfrequenz erhöht wird.

2. Blindleistungskompensator (10) nach Anspruch 1, **dadurch gekennzeichnet, dass** die Korrekturmittel (48) dazu eingerichtet sind, einen Wert des Ausgleichstroms ($I_{equ}$) zu bestimmen, wobei der Ausgleichsstrom ($I_{equ}$) ein periodisches Signal der Frequenz ist, die gleich einem mehrfachen Geradzahligen ungleich null der Netzfrequenz ist.

3. Blindleistungskompensator (10) nach Anspruch 2, **dadurch gekennzeichnet, dass** der Ausgleichsstrom ($I_{equ}$) ein sinusförmiges Signal der Frequenz ist, die gleich einem mehrfachen Geradzahligen ungleich null der Netzfrequenz

EP 2 613 432 B1

ist.

4. Blindleistungskompensator (10) nach Anspruch 2 oder 3, **dadurch gekennzeichnet, dass** die Amplitude des Ausgleichstromes ($I_{equ}$) proportional zu einer Differenz zwischen dem aktuellen Wert der ersten Spannung ($V_{DC1}$) und dem aktuellen Wert der zweiten Spannung ($V_{DC2}$) ist.

5. Blindleistungskompensator (10) nach irgendeinem der vorhergehenden Ansprüche, **dadurch gekennzeichnet, dass** jeder elektronische Unterbrecher (34) bidirektional ist und einen Transistor (36) und eine Diode (38) aufweist, die antiparallel geschaltet sind.

6. Blindleistungskompensator (10) nach Anspruch 5, **dadurch gekennzeichnet, dass** der Transistor (36), ein Bipolartransistor mit isoliertem Gate ist.

7. Blindleistungskompensator (10) nach irgendeinem der vorhergehenden Ansprüche, **dadurch gekennzeichnet, dass** der Ausgleichsstrom ($I_{equ}$) ein periodisches Signal der Frequenz ist, die gleich der doppelten Netzfrequenz ist.

8. Verfahren zum Ausgleichen von Mittenbusspannungen in einem Blindleistungskompensator (10) nach irgendeinem der vorhergehenden Ansprüche, aufweisend die folgenden Schritte:

   - Berechnen (81a) von Steuersignalen für elektronische Unterbrecher (34) des oder jedes Wechselrichters (20) des Blindleistungskompensators (10),
   - Korrektur der Steuersingale, um die Differenz zwischen dem Wert der ersten Spannung ($V_{DC1}$) und dem der zweiten Spannung ($V_{DC2}$) zu reduzieren,
   - Anwenden (86) der modifizierten Steuersignale auf die elektronischen Unterbrecher,
   - wobei das Verfahren **dadurch gekennzeichnet ist, dass**
   - der Schritt der Korrektur der Steuersignale einen Schritt (82) des Hinzufügens eines Ausgleichsstromes zu einem Steuerzielstrom mittels der Korrekturmittel (50) des Kompensators (10) aufweist, wobei der Ausgleichstrom dazu eingerichtet ist, den Steuerzielstrom mit Hilfe dieses Ausgleichstromes zu korrigieren, um die Differenz zwischen den Werten der ersten ($V_{DC1}$) und der zweiten ($V_{DC2}$) Spannung zu reduzieren, wobei der Steuerzielstrom um eine geradzahlige Oberwelle der Netzfrequenz erhöht wird.

9. Verfahren nach Anspruch 8, **dadurch gekennzeichnet, dass** der Schritt der Korrektur der Steuersignale einen Vorbedingungsschritt (81b) der Ermittlung eines Wertes des Ausgleichstromes mittels der Korrekturmittel (48) des Kompensators (10) aufweist, wobei der Ausgleichstrom ein periodisches Signal der Frequenz ist, die gleich einem mehrfahren Geradzahligen ungleich null der Netzfrequenz ist.

10. Verfahren nach Anspruch 9, **dadurch gekennzeichnet, dass** bei dem Schritt (81b) der Ermittlung eines Wertes des Ausgleichstromes, die Amplitude des Ausgleichstromes als proportional zu der Differenz zwischen dem aktuellen Wert der ersten Spannung ($V_{DC1}$) und dem aktuellen Wert der zweiten Spannung ($V_{DC2}$) genommen wird.

**Claims**

1. Reactive power compensator (10) able to be connected electrically to an alternating electrical network (12) comprising M phase(s) and with a network frequency, wherein M is greater than or equal to 1, the compensator (10) comprising M phase(s) and comprising:

   - at least one continuous voltage input bus (18) able to provide reactive power,
   - at least one voltage inverter (20) connected to the continuous voltage bus (18) and able to convert a continuous input current into an alternating output current, the or each inverter (20) comprising two inlet terminals (26A, 26B), M output terminals (28U, 28V, 28W) and M switching branches (30), each output terminal (28U, 28V, 28W) corresponding to one phase, each switching branch (30) comprising controllable electronic switches (34), the or each inverter (20) also comprising a first capacitor (C1) having a first voltage ($V_{DC1}$) at its terminals and a second capacitor (C2) having a second voltage ($V_{DC2}$) at its terminals, the two capacitors (C1, C2) being connected in series between the two input terminals (26A, 26B) of the inverter,
   - means (22) for controlling the electronic switches (34) of the or each inverter (20), comprising calculating means (46) able to generate a target control current ($I_{cible}$) from a current to be compensated ($I_{charge}$), means (52) for combining the target control current ($I_{cible}$) and the current $I_{end}$ at the output from the inverter (20) to

9

provide a differential current ($I_{diff}$), means (54) for emitting a control signal able to control the switches (34) from the differential current ($I_{diff}$) for forming the output current ($I_{ond}$), and means (48, 50) for correcting, from the first ($V_{DC1}$) and second ($V_{DC2}$) voltages, control signals for the switches (34), the correction means (48, 50) being able to reduce the difference between the value of the first voltage and that of the second voltage,

**characterised in that** the correction means (48, 50) are able to add a balancing current ($I_{equ}$) to the target control current ($I_{cible}$), the balancing current ($I_{equ}$) being able to correct the target control current ($I_{cible}$) in order to reduce the difference between the values of the first ($V_{DC1}$) and second ($V_{DC2}$) voltages, the target control current ($I_{cible}$) being increased by means of said balancing current for an even harmonic of the network frequency.

2. Reactive power compensator (10) according to claim 1, **characterised in that** the correction means (48) are able to determine a value of the balancing current ($I_{equ}$), the balancing current ($I_{equ}$) being a periodic signal of frequency equal to a non-zero even multiple of the network frequency.

3. Reactive power compensator (10) according to claim 2, **characterised in that** the balancing current ($I_{equ}$) is a sinusoidal signal of frequency equal to a non-zero even multiple of the network frequency.

4. Reactive power compensator (10) according to claim 2 or 3, **characterised in that** the amplitude of the balancing current ($I_{equ}$) is proportional to the difference between the present value of the first voltage ($V_{DC1}$) and the present value of the second voltage ($V_{DC2}$).

5. Reactive power compensator (10) according to any of the preceding claims, **characterised in that** each electronic switch (34) is bidirectional and comprises a transistor (36) and a diode (38) connected in anti-parallel.

6. Reactive power compensator (10) according to claim 5, **characterised in that** the transistor (36) is a bipolar isolated grid transistor.

7. Reactive power compensator (10) according to any of the preceding claims, **characterised in that** the balancing current ($I_{equ}$) is a periodic signal of frequency equal to double the network frequency.

8. Method for balancing half-bus voltages in a reactive power compensator (10) according to any of the preceding claims, comprising the following steps:

   - calculation (81a) of control signals for the electronic switches (34) of the or each inverter (20) of the reactive power compensator (10),
   - correction of the control signals in order to reduce the difference between the value of the first voltage ($V_{DC1}$) and that of the second voltage ($V_{DC2}$),
   - application (86) of the modified control signals to said electronic switches,

   the method being **characterised in that**:

   - the step of correcting the control signals comprises a step (82) of addition, by the correction means (50) of the compensator (10), of a balancing current to the target control current, the balancing current being able to correct the target control current by means of said balancing current, in order to reduce the difference between the values of the first ($V_{DC1}$) and second ($V_{DC2}$) voltages, the target control current being increased for an even harmonic of the network frequency.

9. Method according to claim 8, **characterised in that** the step of correcting the control signals comprises a prior step (81b) of determination, by the correction means (48) of the compensator (10), of a value of the balancing current, the balancing current being a periodic signal of frequency equal to a non-zero even multiple of the network frequency.

10. Method according to claim 9, **characterised in that** during step (81b) of determining a value of the balancing current, the amplitude of the balancing current is taken as being proportional to the difference between the present value of the first voltage ($V_{DC1}$) and the present value of the second voltage ($V_{DC2}$).

## FIG.1

$V_{DC1}$

$V_{DC2}$

$I_{charge}$

$I_{ond}$

10

18

22

$V_{DC1}$

$V_{DC2}$

DC

AC

20

$I_{ond}$

16

$I_{charge}$

14

12

## FIG.1

22

-46-

$I_{charge}$

$I_{cible}$

-50-

$I_{ref}$

52

$I_{diff}$

54

-66-

68

MLI

-70-

$I_{ond}$

$I_{equ}$

-48-

$V_{DC1}$

$V_{DC2}$

## FIG.3

**FIG.2**

FIG.4

FIG.5

FIG.6

FIG.7

## RÉFÉRENCES CITÉES DANS LA DESCRIPTION

**Documents brevets cités dans la description**

- FR 2947971

**Littérature non-brevet citée dans la description**

- **H. AKAGI.** Modern active filters and traditional passive filters. *Bulletin of the polish academy of sciences - Technical sciences,* 2006, vol. 4 (3